# EUROPEAN PATENT APPLICATION

(11) **EP 4 491 490 A1**
(43) Date of publication of application: **15.01.2025**
(21) Application number: 22931014.9
(22) Date of filing: 11.11.2022
(51) Int. Cl.: B61L 23/00, G06T 7/00

(54) **STATE DETERMINATION DEVICE, STATE DETERMINATION METHOD, AND MOBILE OBJECT SUPPORT SYSTEM**

(30) Priority: 10.03.2022 JP 2022036985
(71) Applicant: Hitachi, Ltd., Tokyo 100-8280 (JP)
(72) Inventor: KITAMURA, Shogo, Tokyo 100-8280 (JP); HIROKI, Keiichi, Tokyo 100-8280 (JP)
(74) Representative: Mewburn Ellis LLP
(86) International application number: PCT/JP2022/042092
(87) International publication number: WO 2023/171042

(57) **Abstract**

A state determination device including: an imaging device configured to capture an image of a relatively moving determination target; a determination target detection unit configured to detect determination target information from a captured image by the imaging device and output the detected determination target information and indeterminacy of the detection; and a target determination unit configured to determine that a state of the determination target is abnormal in a case where the indeterminacy is larger than a predetermined threshold value.

## Description

### Technical Field

The present invention relates to a state determination device, a state determination method, and a moving body support system.

### Background Art

As a state determination device in the related art, for example, an abnormality detection device of a liner member as disclosed in PTL 1 is known. As a main application of the state determination device, for example, there is a railway driving support system that supports a visual confirmation operation of a track state in front of a railway vehicle that is travelling. In supporting the visual confirmation operation, a method is useful in which a camera is mounted on the railway vehicle and state determination is executed using an analysis device inside a moving body or outside the moving body in order to substitute a part or all of the state determination of normal or abnormal by visual check of a crew.

PTL 1 discloses that "including: a learning model 43 in which a learning image related to a liner member and a correct value for each pixel in the learning image as to whether the pixel is abnormal are deep learned as learning data, ... configured to input the image as an input image to the learning model 43 and infer whether the pixel corresponds to the abnormality for each pixel in the input image".

### Citation List

### Patent Literature

PTL 1: JP2020-128877A

### Summary of Invention

### Technical Problem

However, in a case where a method disclosed in PTL 1 is used in the driving support system as described above, since only known abnormal states defined in advance as learning data can be detected, there is room for improvement in detecting unknown abnormal states.

### Solution to Problem

A state determination device according to an aspect of the present invention, including: an imaging device configured to capture an image of a relatively moving determination target; a determination target detection unit configured to detect determination target information from a captured image by the imaging device and output the detected determination target information and indeterminacy of the detection; and a target determination unit configured to determine that a state of the determination target is abnormal in a case where the indeterminacy is larger than a predetermined threshold value.

A moving body support system according to an aspect of the present invention, including: an information control unit that is provided independently of the moving body; a position information acquiring unit that is mounted on the moving body and is configured to acquire a current time and a current position of the moving body; and an information transmitting and receiving unit that is mounted on the moving body and is configured to transmit, to the information control unit, reference information in which the current time and the current position are associated with the determination target information detected by the determination target detection unit. In the moving body support system, the information control unit is provided with an information storage unit that stores the reference information received from a plurality of moving bodies supported by the moving body support system, the information control unit is configured to, when the reference information transmitted from the information transmitting and receiving unit is received, search a plurality of pieces of reference information stored in the information storage unit in which a time within a predetermined time before reception is associated with the current position, and transmit the reference information obtained by searching to the information transmitting and receiving unit, and the determination target detection unit is configured to, when the information transmitting and receiving unit receives the reference information obtained by searching, calculate the indeterminacy based on the detected determination target information and the reference information obtained by searching.

A state determination method according to an aspect of the present invention is a state determination method for determining a state of a determination target moving relative to an imaging device based on a captured image of the determination target, the state determination method including: detecting determination target information from the captured image and outputting the detected determination target information and indeterminacy of the detection; and determining that the state of the determination target is abnormal in a case where the indeterminacy is larger than a predetermined threshold value.

### Advantageous Effects of Invention

According to the present invention, it is possible to detect an unknown abnormality that may occur.

### Brief Description of Drawings

FIG. 1 is a block diagram illustrating a configuration of a state determination device according to a first embodiment.
FIG. 2 is a flowchart illustrating an example of state determination processing according to the first embodiment.
FIG. 3 is a diagram illustrating an internal structure of a track detection unit according to a second embodiment.
FIG. 4 is a schematic diagram illustrating a situation of a track parameter.
FIG. 5 is a flowchart illustrating an example of an internal processing flow in step S203 of FIG. 2.
FIG. 6 is a diagram illustrating a configuration of a state determination device according to a third embodiment.
FIG. 7 is a schematic diagram illustrating calculation of indeterminacy according to the third embodiment.
FIG. 8 is a diagram illustrating a track detection unit according to a fourth embodiment.
FIG. 9 is a diagram illustrating a configuration of a state determination device according to a fifth embodiment.
FIG. 10 is a diagram illustrating an example of an abnormality occurrence pattern.
FIG. 11 is a diagram illustrating a configuration of a state determination device according to a sixth embodiment.
FIG. 12 is a diagram illustrating a configuration of a state determination device according to a seventh embodiment.
FIG. 13 is a diagram illustrating a schematic configuration of a railway driving support system according to an eighth embodiment.
FIG. 14 is a diagram illustrating a configuration of a state determination device according to a ninth embodiment.

### Description of Embodiments

Hereinafter, embodiments of a state determination device according to the present invention will be described with reference to the drawings. The following description and drawings are examples for describing the present invention, and are appropriately omitted and simplified for clarity of the description. In the following description, the same or similar elements and processing are denoted by the same reference numerals, and redundant descriptions thereof may be omitted. The content described below is merely an example of the embodiment of the present invention, and the present invention is not limited to the embodiment to be described below, and can be implemented in various other embodiments.

### (First Embodiment)

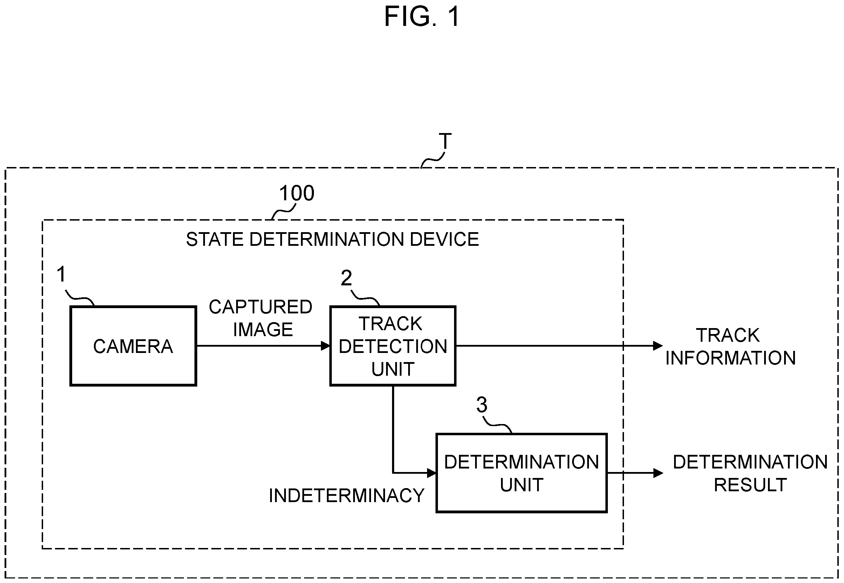

In the present embodiment, a railway driving support system which is a main application of a state determination device and a state determination method according to the present invention will be described as an example. FIG. 1 is a block diagram illustrating an example of a state determination device 100. The state determination device 100 constitutes a part of the railway driving support system. The state determination device 100 detects a state abnormality that interferes with travelling of a railway vehicle using a captured video of the front of the railway vehicle captured by a camera 1. When a state abnormality is detected by the state determination device 100, the railway driving support system issues an alert to a driver. In the present embodiment, knowledge related to a track acquired through detection of the track in a captured image is used to detect an unknown abnormality that may occur in the track.

As illustrated in FIG. 1, the state determination device 100 includes the camera 1, a track detection unit 2, and a determination unit 3. The state determination device 100 is mounted on a railway vehicle T. The camera 1 includes an imaging element such as a CMOS image sensor, and acquires a captured image of a travelling space mainly of the front of the railway vehicle T. Imaging data, which is a captured image of the camera 1, is input to the track detection unit 2.

The state determination device 100 includes a microcomputer, a processor, a calculation device similar to the microcomputer and the processor, a ROM, a RAM, a flash memory, a hard disk, an SSD, a memory card, an optical disk, and a storage device similar to the ROM, the RAM, the flash memory, the hard disk, the SSD, the memory card, and the optical disk, and realizes functions of the track detection unit 2 and the determination unit 3 by executing a program stored in the storage device.

The imaging data from the camera 1 is input to the track detection unit 2. The track detection unit 2 applies image processing for detecting track information, which is information of a determination target, to the imaging data, and outputs the detected track information. Here, the determination target is a rail, a crosstie, a ballast, or the like which is a component of the track. The track information to be output includes, for example, information indicating which of the components of the track such as a rail, a crosstie, and a ballast each pixel of the captured image corresponds to or does not correspond to, using semantic segmentation for track detection. Learning of the track detection based on a normal image is executed in advance.

The track detection unit 2 detects the track information from the captured image, and outputs the detected track information and indeterminacy of track information detection. In a case where semantic segmentation is used for the track detection, a class (track information) referred to as a rail, a crosstie, or a ballast, and a prediction score related to the class are obtained. Therefore, an amount having a negative correlation with the prediction score may be introduced and set as the indeterminacy. For example, in a state where a prediction score of 0 to 1 is defined and the ballast is 0.8, the crosstie is 0.1, and the rail is 0.1, the class referred to as ballast and the prediction score of 0.8 are obtained by semantic segmentation. In this case, an amount of "1 - prediction score" or "1 -(prediction score)²" may be set as the indeterminacy. As the values increase, the indeterminacy increases.

The determination unit 3 determines a state of the track (rail, crosstie, ballast, or the like) based on the indeterminacy input from the track detection unit 2. Specifically, when the value of the indeterminacy described above is larger than a preset threshold value, the state of the track is determined to be abnormal, and a determination result thereof is output. Here, as a method for setting the threshold value, for example, track detection is executed on captured images of various normal tracks and a distribution of indeterminacy is obtained. Then, a value exceeding an upper limit of the obtained distribution is set as the threshold value.

### [Operation Sequence]

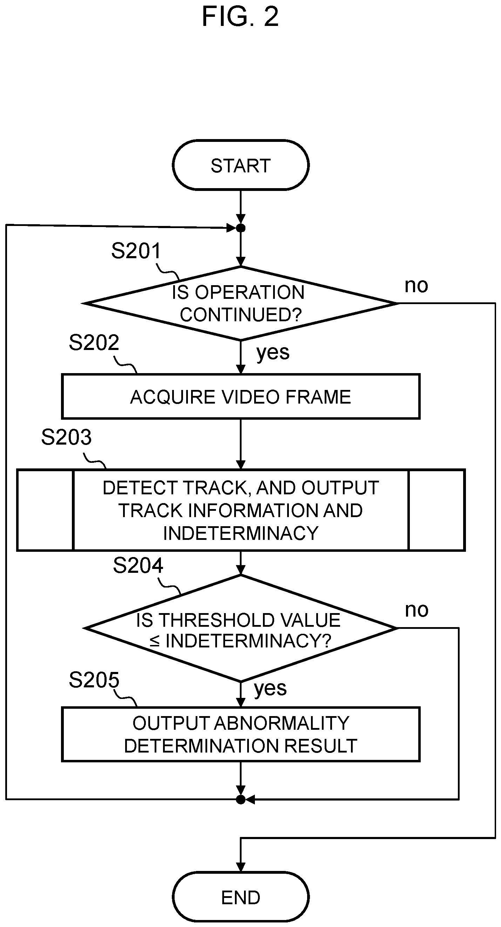

FIG. 2 is a flowchart illustrating an example of state determination processing executed by the state determination device 100. When the state determination device 100 is activated, a processing operation of FIG. 2 is started. In step S201, it is determined whether there is an operation completion instruction to complete the state determination processing. In a case where an operation completion instruction is received, operations of the state determination processing of FIG. 2 are completed. On the other hand, in a case where no operation completion instruction is received, the process proceeds from step S201 to step S202.

In step S202, a video frame captured by the camera 1 is acquired and input to the track detection unit 2. Next, in step S203, indeterminacy of detection is calculated simultaneously with detection of a track from the acquired video frame in the track detection unit 2. The track detection unit 2 outputs track information and the indeterminacy which are track detection results.

In step S204, the determination unit 3 compares the threshold value described above with the obtained indeterminacy, and determines whether the indeterminacy is equal to or larger than the threshold value. When it is determined in step S204 that the indeterminacy is equal to or larger than the threshold value, the process proceeds to step S205 and an abnormality determination result indicating that there is an abnormality in the track is output, and then the process returns to step S201. On the other hand, when it is determined in step S204 that the indeterminacy is smaller than the threshold value, the process returns to step S201.

As described above, in the present embodiment, by using the indeterminacy obtained along with the detection of the track information in the captured image, it is possible to detect an unknown abnormality that may occur in the track even without prior knowledge and learning data related to the state abnormality of the track serving as a determination target. In addition, since the indeterminacy described above is obtained at the time of detection of the track information, a calculation amount can be reduced as compared with a case where the detection of the track information and detection of state information used for state determination are individually executed.

In the above-described embodiment, the entire state determination device 100 is mounted on a moving body. However, only the camera 1 may be mounted on the railway vehicle T which is a moving body, and processing of the track detection unit 2 and the determination unit 3 may be executed by a processing unit provided on other than the moving body, for example, a server such as a cloud server.

### (Second Embodiment)

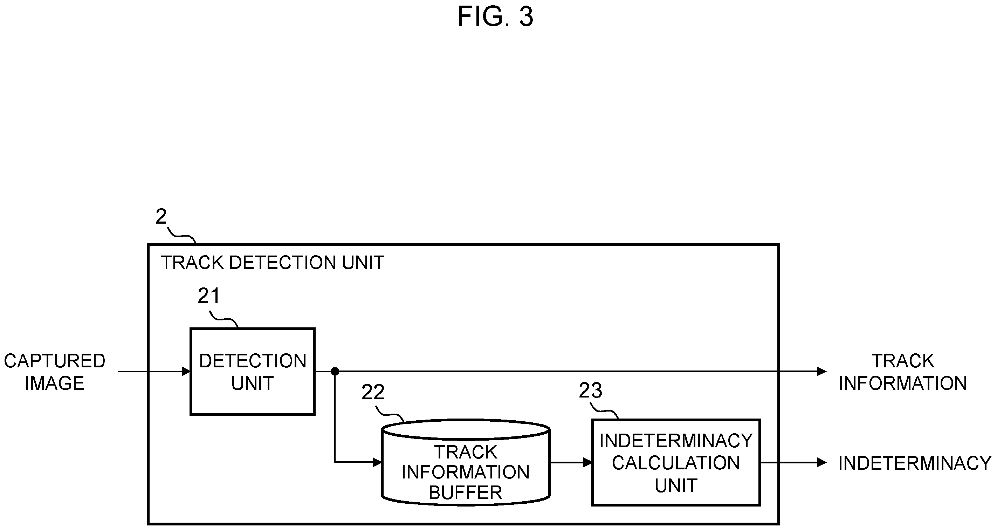

A second embodiment will be described with reference to FIGS. 3 to 5. In the second embodiment, a configuration is provided in which indeterminacy of track detection is output based on a variance of a series of track information detected from successive captured images. In the present embodiment, among configurations illustrated in FIG. 1, configurations of the camera 1 and the determination unit 3 are the same as those described above, but an internal structure of the track detection unit 2 is as illustrated in FIG. 3. Hereinafter, descriptions of the camera 1 and the determination unit 3 having the same configurations will be omitted, and mainly the track detection unit 2 will be described.

As illustrated in FIG. 3, the track detection unit 2 includes a detection unit 21, a track information buffer 22, and an indeterminacy calculation unit 23. The detection unit 21 includes, for example, a Bayesian neural network (BNN), applies BNN for detecting a track region to a captured image from the camera 1, and outputs track information which is a detection result. Here, the track information to be output includes, for example, track parameters such as a curvature indicating a travelling direction of the track. In addition, the track parameter detected with respect to the captured image may be one parameter or a plurality of parameters. In a case of a plurality of track parameters, the track parameters may be configured not by one type of track parameters (for example, curvature) but by a plurality of types of track parameters. Hereinafter, a case where one track parameter is output will be described as an example.

The track information output from the detection unit 21 is output from the track detection unit 2 and stored in the track information buffer 22. The track information buffer 22 has a performance of storing track information of the past M (1<M) frames including the latest track information. That is, in a case where the track detection is newly executed in a state in which the track information of the M frames is stored, the oldest track information is rejected and the latest track information is stored.

The indeterminacy calculation unit 23 extracts the latest, that is, the most recent N (1<N≤M) frames of track information from the track information buffer 22, and calculates indeterminacy of detection based on a variance of the track information of the N frames. As the indeterminacy to be calculated, for example, the variance itself may be set as the indeterminacy, or addition and subtraction of bias, multiplication of weighting, or the like may be executed with respect to the variance.

In general, in the BNN, an internal model parameter is defined as a probability distribution, and a model parameter used at the time of inference is sampled based on the probability distribution. Therefore, the track parameter to be output has a different value for each inference. Accordingly, it is possible to define an expected value and a variance in relation to a series of track parameters output by executing inference N times on the same captured image.

Learning of the BNN is executed such that an expected value of a track parameter to be output approaches a true value using a captured image of a normal track having no abnormality. As a result, a variance of the track parameter to be output with respect to the captured image of the normal track becomes small. On the other hand, with respect to a captured image of a track in which an unknown abnormality that is not seen at the time of learning occurs, the variance of the track parameter to be output increases.

In order to define the expected value and the variance with respect to the track parameter to be output by the BNN, N times of inference need to be executed on the same captured image, and thus throughput from capturing an image to determination is reduced. However, the track of the railway does not rapidly change, and there is a property that similarity of image information between successive captured images is high. In the present embodiment, the variance is calculated based on track parameters of the latest successive N frames using this property, and the indeterminacy of detection is calculated based on the variance, thereby improving the throughput from capturing an image to determination.

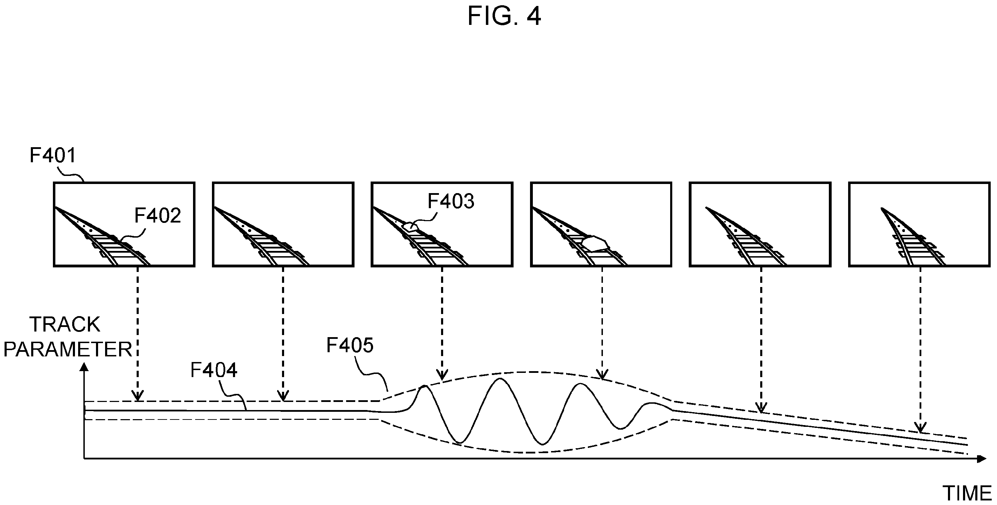

FIG. 4 is a schematic diagram illustrating a situation of a track parameter detected by the detection unit 21. A captured image F401 shows a rail F402, and the detection unit 21 specifies a travelling space of the railway vehicle by detecting a track parameter F404 such as a curvature indicating a travelling direction of the rail F402. In the example illustrated in FIG. 4, the track parameter F404 is the curvature of the rail F402, and the rail F402 gradually gets closer to a straight line from a left curve with a lapse of time. An abnormality F403 (obstacle on the track) occurs in the middle of getting closer to the straight line from the left curve.

As described above, for the track parameter F404, a variance F405 is calculated using values of the latest N frames. In FIG. 4, two broken lines drawn so as to sandwich the track parameter F404 indicated by a solid line indicate the variance F405. In a normal track before and after the occurrence of the abnormality F403, a value of the track parameter F404 to be output in accordance with a change of the rail F402 in the captured image F401 also changes, and the variance F405 in that case maintains a small value. On the other hand, when the abnormality F403 occurs, the track parameter F404 is not stable and the variance F405 increases. Accordingly, the indeterminacy of detection can be calculated based on the variance F405, and the state of the track can be determined based on the indeterminacy.

### [Operation Sequence]

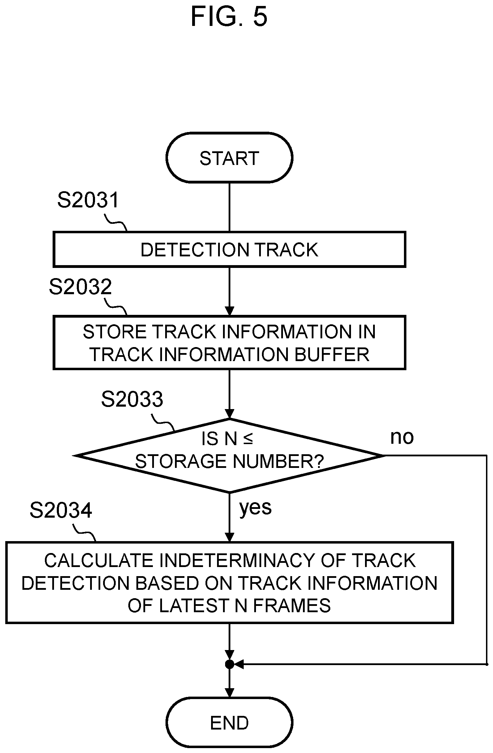

A basic flow related to state determination processing of the state determination device 100 is the same as the flowchart illustrated in FIG. 2, but a processing content of step S203 differs according to an operation of the track detection unit 2 described above. In the present embodiment, internal processing of step S203 of FIG. 2 is replaced with a series of processing illustrated in FIG. 5. FIG. 5 is a flowchart illustrating an example of an internal processing flow in step S203 of FIG. 2.

In step S2031 of FIG. 5, the detection unit 21 detects a track from a captured image and outputs track information. In step S2032, the track information is stored in the track information buffer 22. In step S2033, it is determined whether the number of pieces of track information stored in the track information buffer 22 is equal to or larger than N, and in a case where the number is equal to or larger than N, the process proceeds to step S2034. In step S2034, the indeterminacy calculation unit 23 calculates indeterminacy of track detection based on the track information of the latest N frames. On the other hand, in a case where it is determined in step S2033 that the number of pieces of track information is smaller than N, a series of processing is completed. When the series of processing of FIG. 5 is completed, that is, when the processing of step S203 of FIG. 2 is completed, the process proceeds to step S204 of FIG. 2.

As described above, in the present embodiment, since the indeterminacy of track detection is output based on the variance of the series of track information detected from the successive captured images, the state of the track can be determined based on determinacy. Further, in a general BNN, N times of inference are executed on the same image to acquire N track parameters, but in the present embodiment, by using N successive frames of images with high similarity, N track parameters similar to those in the case of N times of inference are acquired. Each time an image of one frame is captured, that is, at each cycle time of capturing an image, the indeterminacy based on the variance of the track information of the N frames read from the track information buffer 22 is calculated, so that a time from capturing an image to determination can be shortened as compared to the case where inference is executed N times on one frame image.

### (Third Embodiment)

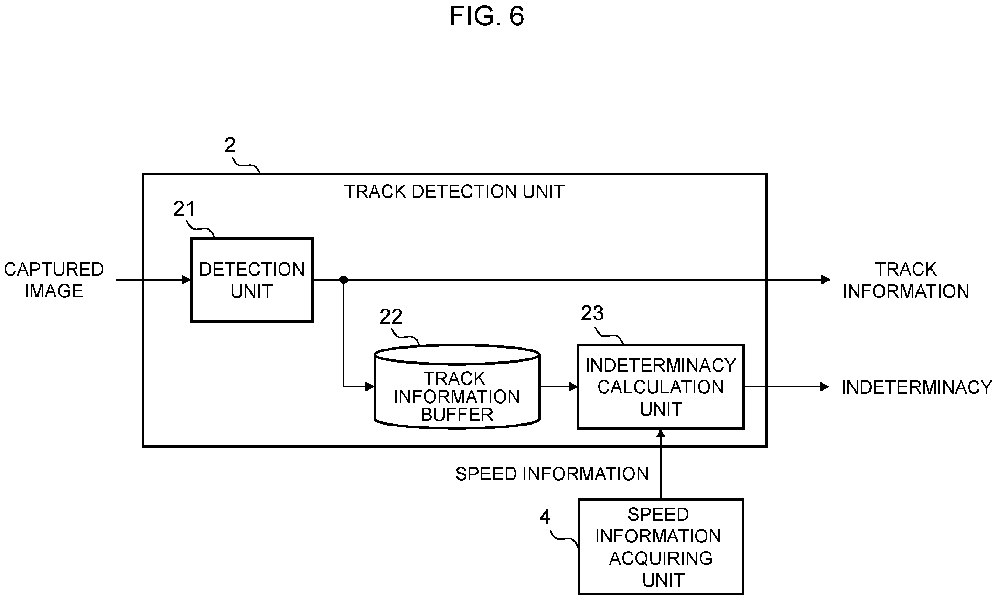

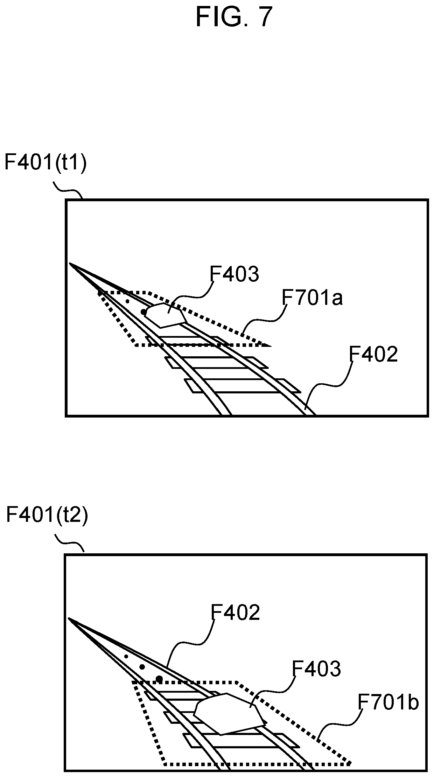

A third embodiment will be described with reference to FIGS. 6 and 7. In the third embodiment, calculation of indeterminacy of track detection and determination of a state of a track are executed in units of pixels of a captured image using successive captured images and speed information of a railway vehicle.

In the present embodiment, as illustrated in FIG. 6, a configuration is provided in which a speed information acquiring unit 4 is added to the state determination device 100 in the configuration illustrated in FIG. 3. The speed information acquiring unit 4 may acquire, for example, a detection value of a speedometer mounted on the railway vehicle, or may calculate a speed by executing a time derivative of position information acquired by a global positioning system (GPS). Configurations other than those illustrated in FIG. 6 are the same as those of the first embodiment described above, and the descriptions thereof are omitted below.

A detailed configuration of the track detection unit 2 will be described with reference to FIG. 6. The detection unit 21 includes, for example, a BNN that executes semantic segmentation. The detection unit 21 applies a BNN for detecting a track region to a captured image from the camera 1, and outputs track information in units of pixels. Here, the track information to be output may be, for example, information indicating which of the components of the track such as a rail, a crosstie, and a ballast each pixel of the captured image corresponds to or does not correspond to.

The track information in units of pixels detected by the detection unit 21 is output from the track detection unit 2 and stored in the track information buffer 22. The track information buffer 22 has a performance of storing track information in units of pixels of the past M (1<M) frames including the latest track information in units of pixels. The speed information acquiring unit 4 measures a current speed of the railway vehicle, and outputs the speed information to the indeterminacy calculation unit 23.

The indeterminacy calculation unit 23 extracts the track information in units of pixels of the latest N (1<N≤M) frames from the track information buffer 22, and tracks pixels indicating the same point among successive frames based on the speed information from the speed information acquiring unit 4. Further, the indeterminacy calculation unit 23 calculates the variance of track information of the pixels indicating the same point, and calculates the indeterminacy of detection in units of pixels based on the calculated variance.

FIG. 7 is a schematic diagram illustrating the calculation of the indeterminacy of detection in units of pixels. FIG. 7 is a diagram illustrating a captured image F401 (t1) captured at a time t1 and a captured image F401 (t2) captured at a time t2 = t1 + Δt. In the captured image F401, a plurality of pixel sets F701 are set along a region of the rail F402. Pixel sets F701a and F701b illustrated in the captured images F401 (t1) and F401 (t2) each indicate one of the plurality of pixel sets F701, and indicate the same pixel set. That is, while a predetermined time Δt elapses, the same pixel set moves from a position of the pixel set F701a to a position of the pixel set F701b in the captured image F401.

As described above, when the pixels indicating the same point are tracked among the successive frames based on the speed information of the railway vehicle, it is possible to continuously track the same point of normal or abnormal. When the state of the track at the same point is normal, the variance of the track information of the pixels indicating the same point becomes small. On the other hand, when the state of the track at the same point is abnormal as illustrated in FIG. 7, the variance of the track information of the pixels indicating the same point becomes large. Accordingly, it is possible to calculate the indeterminacy of track detection in units of pixels based on the variance of the track information in units of pixels and determine the state of the track in units of pixels. As described above, in the present embodiment, it is possible to calculate the indeterminacy of track detection and determine the state of the track in units of pixels of the captured image using the successive captured images and the speed information of the moving body.

### (Fourth Embodiment)

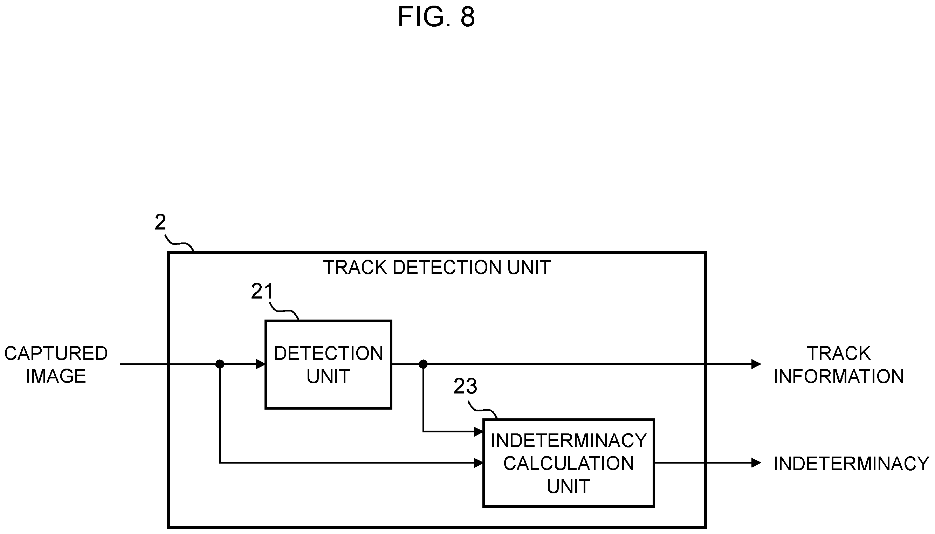

A fourth embodiment will be described with reference to FIG. 8. In the fourth embodiment, prior knowledge about a track is utilized to calculate indeterminacy based on a discrepancy from the prior knowledge. FIG. 8 is a diagram illustrating the track detection unit 2 according to the present embodiment. Other configurations are the same as those of the first embodiment illustrated in FIG. 1, and the descriptions thereof are omitted below.

As illustrated in FIG. 8, the track detection unit 2 includes the detection unit 21 and the indeterminacy calculation unit 23. The detection unit 21 includes, for example, a deep neural network (DNN) that executes semantic segmentation. The detection unit 21 applies a DNN for detecting a track region to a captured image from the camera 1, and outputs track information in units of pixels. Here, as the track information to be output, for example, information indicating which of the components of the track such as a rail, a crosstie, and a ballast each pixel of the captured image corresponds to or does not correspond to is exemplified.

The captured image and the track information in units of pixels output from the detection unit 21 are input to the indeterminacy calculation unit 23. The indeterminacy calculation unit 23 applies prior knowledge of the track corresponding to the track information in units of pixels to the pixel of the captured image or a small region including the vicinity of the pixel. The prior knowledge of the track is, for example, knowledge of "the rail extends far" and "crossties are present at regular intervals".

The indeterminacy calculation unit 23 executes predetermined calculation related to the prior knowledge, and calculates the indeterminacy based on a discrepancy between a calculation result thereof and the prior knowledge. For example, in a case where the detection unit 21 can suitably detect the track, when edge detection is executed on the small region including the vicinity of the pixel determined to correspond to the rail by the detection unit 21, an edge extending in the travelling direction should be detected. On the other hand, in a case where an abnormality such as a breakage or an obstacle occurs in the rail, the edge in the travelling direction cannot be detected or an edge in a direction different from the travelling direction is detected as a result of the edge detection in the small region.

Accordingly, by calculating a difference in angle between the detected direction of the edge and the travelling direction, it is possible to evaluate the discrepancy from the prior knowledge of the track of "the rail extends far". By calculating the indeterminacy based on the discrepancy, the state of the track can be determined. In the evaluation of the discrepancy, the calculation may be executed by considering not only the direction of the edge but also the intensity of the edge. In addition, image information other than the edge such as a texture or a frequency component of the image may be used. Further, in order to calculate the indeterminacy based on the discrepancy, for example, the discrepancy itself may be set as the indeterminacy. Alternatively, addition and subtraction of bias, multiplication of weighting, or the like may be executed with respect to the discrepancy.

### (Fifth Embodiment)

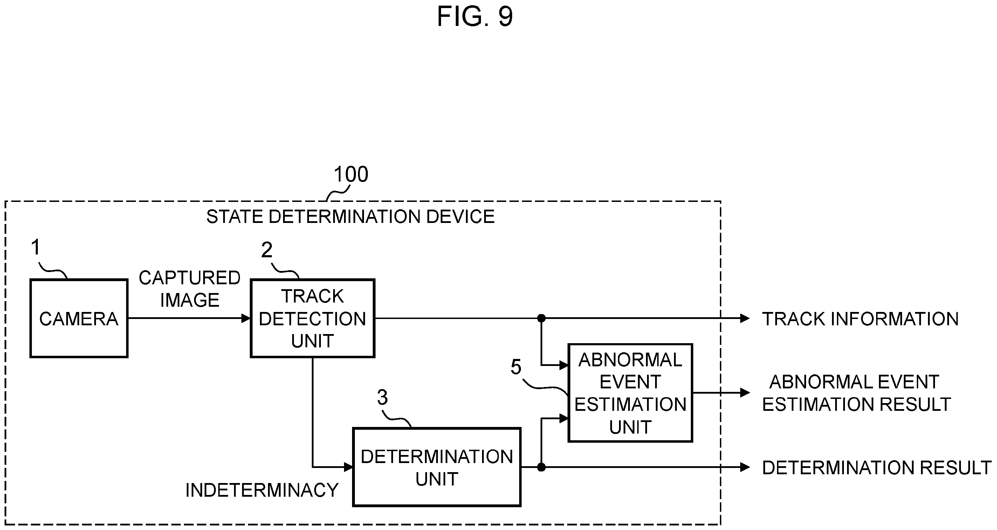

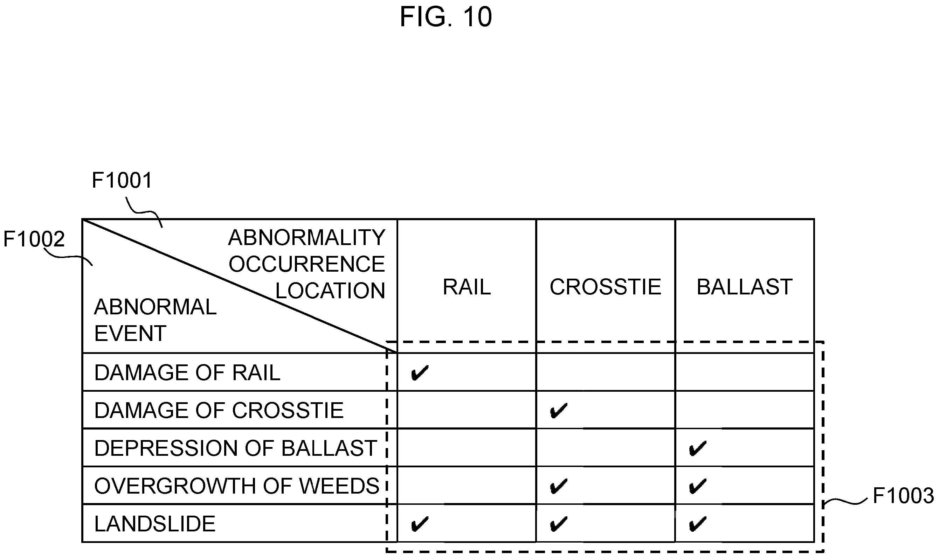

A fifth embodiment will be described with reference to FIGS. 9 and 10. In the fifth embodiment, an abnormal event that is highly likely to have occurred is estimated based on an abnormality occurrence pattern. FIG. 9 is a diagram illustrating a configuration of a state determination device 100 according to the fifth embodiment. The configuration illustrated in FIG. 9 is obtained by adding an abnormal event estimation unit 5 to the configuration illustrated in FIG. 1.

The track detection unit 2 uses, for example, semantic segmentation for track detection, and outputs track information in units of pixels and indeterminacy in units of pixels. Here, the track information in units of pixels to be output is, for example, information indicating which of components of the track such as a rail, a crosstie, and a ballast the pixel corresponds to or does not correspond to.

The determination unit 3 outputs a determination result in units of pixels based on the indeterminacy in units of pixels input from the track detection unit 2. The abnormal event estimation unit 5 compares the track information in units of pixels from the track detection unit 2 with the determination result in units of pixels from the determination unit 3, and specifies a component in which an abnormality has occurred, that is, an abnormality occurrence location. Further, the abnormal event estimation unit 5 estimates an abnormal event that is highly likely to have occurred based on the abnormality occurrence pattern in the abnormality occurrence location.

FIG. 10 is a diagram illustrating an example of an abnormality occurrence location F1001, an abnormal event F1002, and an abnormality occurrence pattern F1003. In the example illustrated in FIG. 10, the track information in units of pixels is information indicating which of a rail, a crosstie, and a ballast each pixel corresponds to or does not correspond to. The abnormality occurrence location F1001 specified by comparing the track information in units of pixels with the determination result in units of pixels includes three types of a rail, a crosstie, and a ballast. Further, the estimated abnormal event F1002 includes five types of a breakage of a rail, a breakage of a crosstie, a depression of a ballast, overgrowth of weeds, and a landslide.

The abnormality occurrence pattern F1003 associates an abnormality occurrence location with an abnormal event, and is defined in advance. For example, in a case where an abnormality does not occur in the rail or the crosstie and an abnormality has occurred only in the ballast, there is a possibility that the ballast is depressed. Alternatively, when an abnormality has occurred in any of the rail, the crosstie, and the ballast, there is a possibility that a large abnormality related to the entire track such as a landslide has occurred.

As described above, in the fifth embodiment, it is possible to estimate an abnormal event that is highly likely to have occurred based on the abnormality occurrence pattern. The abnormality occurrence location F1001, the abnormal event F1002, and the abnormality occurrence pattern F1003 illustrated in FIG. 10 are merely examples, and each item may be added or reduced or the pattern itself may be changed.

### (Sixth Embodiment)

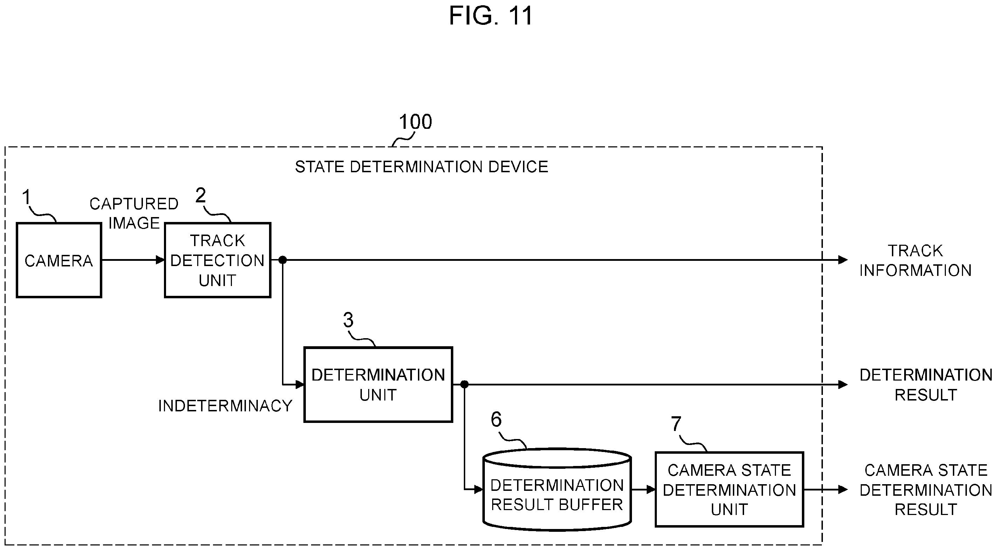

A sixth embodiment will be described with reference to FIG. 11. In the sixth embodiment, based on a residence time of the abnormality, it is possible to determine that the abnormality has occurred not in the track but in the camera. FIG. 11 is a diagram illustrating a configuration of a state determination device 100 according to the sixth embodiment. The configuration illustrated in FIG. 11 is obtained by adding a determination result buffer 6 and a camera state determination unit 7 to the configuration illustrated in FIG. 1.

The determination result buffer 6 has a performance of storing determination results of the past L (1<L) frames including the latest determination result output by the determination unit 3. When determination is newly executed in a state where the determination results of the L frames are stored, the oldest determination result is rejected and the latest determination result is stored.

The camera state determination unit 7 confirms a series of determination results stored in the determination result buffer 6, and determines, in a case where determination results determined to be abnormal exceed the number of frames for the residence time defined in advance, an abnormality has occurred not in the track but in the camera 1. A determination result thereof is output as a camera state determination result. In a case where the determination result is in units of pixels, the residence time may be determined in units of pixels. Alternatively, in a case where an abnormality has occurred in a predetermined number of pixels or more, it may be considered that an abnormality occurs in units of images, and the residence time may be determined in units of images.

Examples of the abnormality occurring in the camera 1 include dirt and snow adhering to a lens. Since the railway vehicle is travelling, in a case where an abnormality has occurred in the track, the abnormality eventually deviates from the angle of view of the camera 1, and the abnormality does not stay for a long time. On the other hand, in a case where the abnormality has occurred in the camera 1, when the abnormality is dirt or snow, determination results of abnormality can be continuously output as long as the dirt or snow adheres to the lens.

Accordingly, it is possible to determine that the abnormality has occurred not in the track but in the camera 1 based on the residence time of the abnormality. As described above, in the present embodiment, it is possible to determine that the abnormality has occurred not in the track but in the camera based on the residence time of the abnormality.

### (Seventh Embodiment)

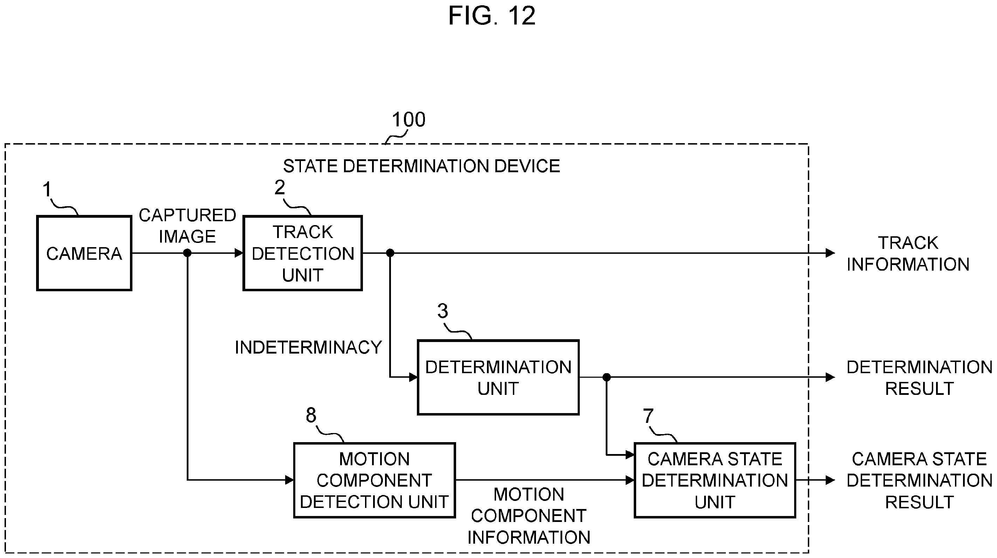

A seventh embodiment will be described with reference to FIG. 12. In the seventh embodiment, it is determined that an abnormality has occurred not in the track but in the camera based on a motion component of the abnormality. FIG. 12 is a diagram illustrating a configuration of a state determination device 100 according to the seventh embodiment. The configuration illustrated in FIG. 12 is obtained by adding a motion component detection unit 8 and a camera state determination unit 7 to the configuration illustrated in FIG. 1.

For example, the motion component detection unit 8 detects a motion component in units of pixels or in units of small regions in a captured image by calculating an optical flow from the captured image. Detected motion component information is output to the camera state determination unit 7.

For example, in a case where the determination result output by the determination unit 3 is in units of pixels, the camera state determination unit 7 confirms a motion component at a pixel position where an abnormality has occurred based on the motion component information. In a case where it is considered that the motion component is lower than a predetermined threshold value and is stationary, the camera state determination unit 7 determines that the abnormality has occurred not in the track but in the camera 1, and outputs this determination as the camera state determination result.

Examples of the abnormality occurring in the camera 1 include dirt and snow adhering to a lens. Since the railway vehicle is travelling, in a case where the abnormality has occurred in the track, the abnormality moves into the captured image as the railway vehicle travels. On the other hand, in a case where the abnormality has occurred in the camera 1, when the abnormality is dirt or snow, the abnormality does not move into the captured image as long as the dirt or snow adheres to the lens. Accordingly, it is possible to determine that the abnormality has occurred not in the track but in the camera 1 based on the motion component of the abnormality.

### (Eighth Embodiment)

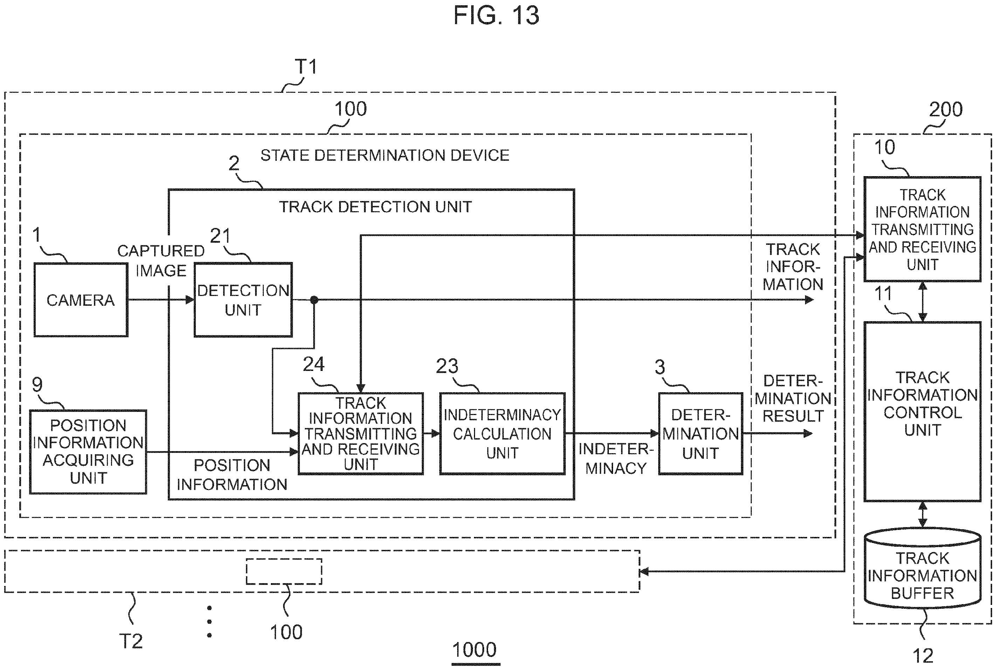

An eighth embodiment will be described with reference to FIG. 13. In the eighth embodiment, by integrating and using track information detected in a plurality of sets, the number of samples of the track information used for calculation of indeterminacy is increased and accuracies of calculation of the indeterminacy and state determination are improved. FIG. 13 is a diagram illustrating a schematic configuration of a railway driving support system 1000 according to the eighth embodiment. The railway driving support system 1000 includes respective state determination devices 100 respectively mounted on a plurality of railway vehicles T1, T2, and the like, and a server 200 provided at a place different from the plurality of railway vehicles T1, T2, and the like. Hereinafter, the processing operation will be described taking the railway vehicle T1 as an example, and similar processing is executed for other railway vehicles T2 and the like.

The state determination device 100 includes a camera 1, a track detection unit 2, a determination unit 3, and a position information acquiring unit 9. The track detection unit 2 includes a detection unit 21 and an indeterminacy calculation unit 23 of the track detection unit 2 illustrated in FIG. 3. The track detection unit 2 further includes a track information transmitting and receiving unit 24. The server 200 includes a track information transmitting and receiving unit 10, a track information control unit 11, and a track information buffer 12.

The position information acquiring unit 9 acquires information related to a current time and a current position of the railway vehicle T1, and outputs information on time and position. As a method for acquiring the current position, for example, a GPS mounted on the railway vehicle T1 may be used. Alternatively, the position may be calculated by acquiring speed information from a speedometer provided in the railway vehicle T1 and integrating the speed with time. The track information transmitting and receiving unit 24 associates the information on time and position output by the position information acquiring unit 9 with the track information output by the detection unit 21 to generate information on time, position, and track, and transmits the information on time, position, and track to the server 200. As illustrated in FIG. 13, the information on time, position, and track is transmitted to the server 200 from not only the railway vehicle T1 but also the other railway vehicles T2 and the like including the state determination device 100.

When the track information transmitting and receiving unit 10 of the server 200 receives the information on time, position, and track from the railway vehicle T1, the track information control unit 11 stores the received information on time, position, and track in the track information buffer 12. Further, the track information control unit 11 searches for an information group on time, position, and track received from the other railway vehicles T2 and the like that have traveled in the past within a predetermined time from the time of reception in relation to a position indicated by the position information included in the information on time, position, and track. Then, the track information control unit 11 transmits the information group on time, position, and track extracted by the search to the railway vehicle T1.

The track information transmitting and receiving unit 24 of the railway vehicle T1 travelling in the position receives the information group on time, position, and track from the server 200, and outputs the received information group on time, position, and track and the latest track information output by the detection unit 21 to the indeterminacy calculation unit 23. The indeterminacy calculation unit 23 calculates the indeterminacy using the information group on time, position, and track and the latest track information.

Since a railway vehicle travels only on a laid track, captured images from a plurality of other railway vehicles travelling at the same position have a property of high similarity. By utilizing the information group on time, position, and track received from the other railway vehicles traveled in the past within a predetermined time from the current time, the number of samples used for calculation of the variance of the track information can be increased and accuracies of the calculation of the indeterminacy and the state determination are improved.

In the configuration illustrated in FIG. 13, the track information buffer 12 is provided only in the server 200, and the information on time, position, and track detected by the plurality of railway vehicles are centrally managed, but for example, track information buffers may be mounted also on the railway vehicles and used in combination.

### (Ninth Embodiment)

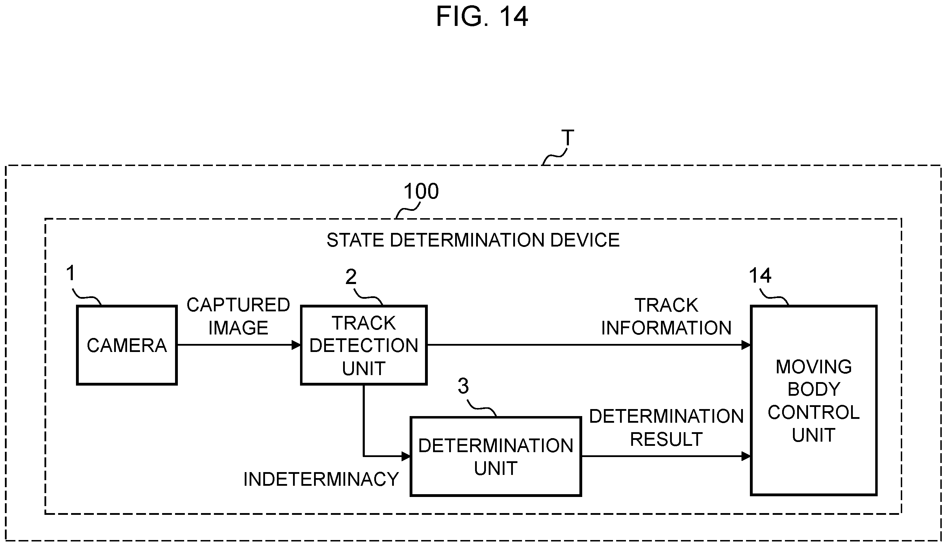

A ninth embodiment will be described with reference to FIG. 14. In the ninth embodiment, a track is detected and a state is determined with respect to a captured image, and a speed of a railway vehicle is controlled based on an obtained track information and a determination result. FIG. 14 is a diagram illustrating a schematic configuration of a state determination device 100 according to the ninth embodiment.

A configuration of the state determination device 100 illustrated in FIG. 14 is a configuration in which a moving body control unit 14 is added to the configuration illustrated in FIG. 1. The moving body control unit 14 controls a speed of the railway vehicle T, which is a moving body, based on track information output by the track detection unit 2 and a determination result output by the determination unit 3. The track information output from the track detection unit 2 indicates a shape of the track. Therefore, for example, it is possible to execute control of reducing the speed of the railway vehicle T in a curved track as compared to a straight track.

The determination result of the determination unit 3 indicates whether there is an abnormality in the track. Therefore, for example, in a case where an abnormality has occurred in the track, it is possible to execute control of immediately applying the brake. According to the control, it is possible to achieve a semi-automatic operation or an automatic operation while maintaining the safety of an operation of the railway vehicle T.

### (Tenth Embodiment)

In the first to ninth embodiments described above, the railway driving support system 1000 including the state determination device 100 has been described as an example. On the other hand, in a tenth embodiment, an example in which the state determination device 100 is applied to a production line inspection system will be described. In the production line inspection system of the present embodiment, a captured image of a production line such as a belt conveyor or an article moving on the production line is used to detect a state abnormality of the production line or the article, and an alert is issued to a worker.

The state determination device 100 in the production line inspection system of the present embodiment has the same configuration as the configuration illustrated in FIG. 1 of the first embodiment, and will be described with reference to FIG. 1. However, each processing unit is fixed not in a moving body such as the railway vehicle T but near the production line. The camera 1 is mounted near a production line and acquires a captured image of a production line such as a belt convey or an article moving on the production line. In order to specify a movement space of the production line from the captured image, the track detection unit 2 applies image processing for detecting a production line region to the captured image, and outputs track information which is information of a determination target. Here, the track information to be output may be, for example, information indicating which of components of the production line such as a belt and a drive roller each pixel of the captured image corresponds to or does not correspond to, using semantic segmentation for the track detection.

The track detection unit 2 detects the production line region and outputs the track information, and simultaneously outputs the indeterminacy of detection. As in the case of the first embodiment, regarding the indeterminacy, for example, in a case where semantic segmentation is used for the track detection, a value having a negative correlation with a prediction score related to an output class may be obtained and set as the indeterminacy.

The determination unit 3 determines the state of the determination target of the production line based on the indeterminacy output from the track detection unit 2. Specifically, in a case where the indeterminacy is larger than a predetermined threshold value, the state of the determination target is determined to be abnormal, and a determination result is output. As a method for determining the threshold value, for example, track detection may be executed on captured images of various normal production lines, a distribution of indeterminacy may be obtained, and a value exceeding an upper limit of the distribution may be set as the threshold value.

The railway driving support system described in the first to ninth embodiments has a configuration in which each processing unit is mounted on the moving body, and the production line inspection system of the present embodiment has a configuration in which each processing unit is fixed not in the moving body but near the production line, but the configurations are common in that the determination target moves relative to the camera 1 in either configuration. Accordingly, the present invention can be applied under a condition that the determination target moves in the captured image.

As described above, in the present embodiment, the production line inspection system can be implemented by a configuration in which the indeterminacy of detection is output at the same time when the production line region is detected from the captured image and the track information is output, and a state of the production line or the article is determined to be abnormal in a case where the indeterminacy is large.

In the embodiment described above, a case is described where the present invention is mainly applied to the railway driving support system for detecting the state abnormality that may hinder the travelling of the railway vehicle and issuing the alert to the crew, but the present invention may be applied to other applications. For example, the present invention may be applied to a driving support system, a maintenance support system, or the like for a vehicle travelling on an express way, an aircraft travelling on a runway, a drone flying along an electric wire, or the like.

According to the embodiments of the present invention described above, the following effects are obtained.

(C1) As illustrated in FIG. 1, the state determination device 100 includes the camera 1 serving as an imaging device that captures an image of a track that is a relatively moving determination target, the track detection unit 2 serving as a determination target detection unit that detects track information that is determination target information from a captured image by the camera 1 and outputs the detected track information and indeterminacy of the detection, and the determination unit 3 that determines that a state of the track is abnormal in a case where the indeterminacy is larger than a predetermined threshold value. As described above, by using the indeterminacy obtained along with the detection of the track information in the captured image, it is possible to detect an unknown abnormality that may occur in the track even without prior knowledge and learning data related to the state abnormality of the track.

(C2) According to the above (C1), as illustrated in FIGS. 3 and 4, the track detection unit 2 reads, from track information of a plurality of frames detected from captured images of a plurality of most recent frames, for example, track information of the latest N frames from the track information buffer 22, and calculates the indeterminacy of detection based on a variance of the track information of the N frames. As described above, it is possible to calculate the indeterminacy of track detection based on a variance of a series of track information detected from successive captured images, and it is possible to shorten a time from capturing an image to determination as compared to a case where inference is executed N times for one frame image.

(C3) According to the above (C1), as illustrated in FIG. 8, the track detection unit 2 detects the track information in units of pixels from the captured image by semantic segmentation, applies prior knowledge of the track serving as a determination target corresponding to the track information in units of pixels to a corresponding pixel of the captured image or a neighboring region including the corresponding pixel and calculates a discrepancy from the prior knowledge, and calculates the indeterminacy of detection based on the discrepancy. The state of the track can be determined based on the indeterminacy calculated in this manner.

(C4) According to the above (C1), as illustrated in FIGS. 9 and 10, the state determination device 100 further includes an abnormal event estimation unit 5 that specifies an abnormality occurrence location and estimates an abnormal event having a high possibility of occurrence, the track detection unit 2 detects the track information in units of pixels from the captured image and outputs the detected track information and the indeterminacy of detection in units of pixels, and the determination unit 3 outputs a determination result in units of pixels based on the indeterminacy in units of pixels. As illustrated in FIG. 10, the abnormal event estimation unit 5 specifies the abnormality occurrence location F1001 based on the track information in units of pixels and the determination result in units of pixels and estimates an abnormal event having a high possibility of occurrence. For example, in a case where an abnormality does not occur in the rail or the crosstie and an abnormality has occurred only in the ballast, there is a possibility that the ballast is depressed.

(C5) According to the above (C1), as illustrated in FIG. 11, the state determination device 100 further includes a camera state determination unit 7 that determines an abnormality of the camera 1, the track detection unit 2 detects elephant track information from the captured images for a plurality of most recent frames, respectively, outputs indeterminacy of the plurality of most recent frames, and the determination unit 3 outputs a plurality of determination results related to the track information of the plurality of most recent frames. When the number of abnormality determination included in the plurality of determination results exceeds a predetermined number (the number of frames corresponding to a residence time defined in advance), the camera state determination unit 7 determines that the camera 1 is abnormal. As described above, it is possible to determine whether the abnormality is caused by the track or the camera.

(C6) According to the above (C1), as illustrated in FIG. 12, the state determination device 100 further includes a motion component detection unit 8 that detects motion component information in units of pixels or in units of small regions in the captured image, and a camera state determination unit 7 that determines an abnormality of the camera 1. The track detection unit 2 detects the track information in units of pixels from the captured image and outputs the detected track information and the indeterminacy of detection in units of pixels, and the determination unit 3 outputs the determination result in units of pixels based on the indeterminacy in units of pixels. Then, the camera state determination unit 7 extracts a motion component at a pixel position of the captured image corresponding to a pixel determined to be abnormal by the determination unit 3 based on the motion component information, and determines that the camera 1 is abnormal in a case where the extracted motion component is lower than a predetermined threshold value.

(C7) According to the above (C1), as illustrated in FIG. 1, the camera 1 may be mounted on the railway vehicle T which is a moving body, and the camera 1 may be configured to capture an image of a moving region which is a moving region of the railway vehicle T and includes a track.

(C8) According to the above (C7), as illustrated in FIGS. 6 and 7, the state determination device 100 further includes a speed information acquiring unit 4 that acquires speed information of the railway vehicle T. The track detection unit 2 detects, with respect to each of captured images of the plurality of most recent frames, the track information in units of pixels from the captured image by semantic segmentation, respectively, tracks pixels indicating the same point among successive frames based on the speed information acquired by the speed information acquiring unit 4 and calculates a variance of the determination target information of the pixels indicating the same point, and calculates indeterminacy of detection in units of pixels based on the variance. As described above, when the pixels indicating the same point are tracked among the successive frames based on the speed information of the railway vehicle T, it is possible to continuously track the same point of normal or abnormal.

(C9) According to the above (C7), as illustrated in FIG. 14, the state determination device 100 further includes a moving body control unit 14 that controls the speed of the railway vehicle T serving as a moving body based on the track information detected by the track detection unit and the determination result of the determination unit 3. By providing such a moving body control unit 14, it is possible to achieve a semi-automatic operation or an automatic operation while maintaining the safety of an operation of the railway vehicle T.

(C10) According to the above (C7), as illustrated in FIG. 1, the moving body may be the railway vehicle T.

(C11) As illustrated in FIG. 13, the railway driving support system 1000 is a moving body support system that supports the railway vehicles T1, T2, and the like provided with the state determination device 100 described in the above (C1). The railway driving support system 1000 includes: the track information control unit 11 provided in the server 200 independently of the railway vehicles T1, T2, and the like; the position information acquiring unit 9 mounted on the railway vehicles T1, T2, and the like and configured to acquire a current position and a current time of each of the railway vehicles T1, T2, and the like; and the track information transmitting and receiving unit 24 mounted on the railway vehicles T1, T2, and the like and configured to transmit, to the track information control unit 11, information on time, position, and target (reference information) in which the current time and the current position are associated with the track information detected by the track detection unit 2. The track information control unit 11 is provided with a track information buffer 12 that stores the information on time, position, and target received from the plurality of moving bodies T1, T2, and the like supported by the railway driving support system 1000, and the track information control unit 11 is configured to, when the information on time, position, and target transmitted from the track information transmitting and receiving unit 24 is received, search a plurality of pieces of information on time, position, and target stored in the track information buffer 12 for information on time, position, and target in which the current position and a time within a predetermined time from the time of reception are associated with each other , and transmit the information on time, position, and target obtained by searching to the track information transmitting and receiving unit 24. The track detection unit 2 is configured to, when the track information transmitting and receiving unit 24 receives the information on time, position, and target obtained by searching, calculate the indeterminacy based on the detected track information and the information on time, position, and target obtained by searching. As described above, by using the information on time, position, and target stored in the track information buffer 12, the number of samples used for calculation of the variance of the track information can be increased, and accuracies of the calculation of the indeterminacy and the state determination are improved.

(C12) As illustrated in FIG. 1, a state determination method for determining a state of a track serving as a determination target moving relative to the camera 1 based on a captured image of the track includes: detecting track information from the captured image and outputting the detected track information and indeterminacy of the detection; and determining that the state of the track is abnormal in a case where the indeterminacy is larger than a predetermined threshold value. By using the indeterminacy of detection when the track is detected from the captured image, it is possible to detect an unknown abnormality that may occur in the track even without prior knowledge and learning data related to the state abnormality of the track serving as a determination target.

The present invention is not limited to the embodiments described above, and includes various modifications. For example, the embodiments described above have been described in detail in order to describe the present invention in an easy-to-understand manner, and are not necessarily limited to including all the described configurations. In addition, a part of a configuration according to a certain embodiment can be replaced with a configuration according to another embodiment, and a configuration according to another embodiment can be added to a configuration according to a certain embodiment. In addition, another configuration can be added to, deleted from, or replaced with a part of a configuration of each embodiment.

In addition, some or all of the above configurations may be configured by hardware, or may be configured to be implemented by a program being executed by a processor. Control lines and information lines considered to be necessary for description are illustrated, and not all control lines and information lines are necessarily illustrated in a product. Actually, almost all configurations may be considered to be connected to one another.

### Reference Signs List

1: camera
2: track detection unit
3: determination unit
4: speed information acquiring unit
5: abnormal event estimation unit
6: determination result buffer
7: camera state determination unit
8: motion component detection unit
9: position information acquiring unit
10, 24: track information transmitting and receiving unit
11: track information control unit
12, 22: track information buffer
14: moving body control unit
21: detection unit
23: indeterminacy calculation unit
100: state determination device
1000: railway driving support system
T, T1, T2: railway vehicle

## Claims

1. A state determination device comprising:
an imaging device configured to capture an image of a relatively moving determination target;
a determination target detection unit configured to detect determination target information from a captured image by the imaging device and output the detected determination target information and indeterminacy of the detection; and
a target determination unit configured to determine that a state of the determination target is abnormal in a case where the indeterminacy is larger than a predetermined threshold value.

2. The state determination device according to claim 1, wherein
the determination target detection unit is configured to calculate the indeterminacy based on a variance of the determination target information of a plurality of frames detected from captured images of a plurality of most recent frames.

3. The state determination device according to claim 1, wherein
the determination target detection unit is configured to
detect the determination target information in units of pixels from the captured image by semantic segmentation,
apply prior knowledge of a determination target corresponding to the determination target information in units of pixels to a corresponding pixel of the captured image or a neighboring region including the corresponding pixel and calculate a discrepancy from the prior knowledge, and
calculate the indeterminacy based on the discrepancy.

4. The state determination device according to claim 1, further comprising
an abnormal event estimation unit configured to specify an abnormality occurrence location and estimate an abnormal event having a high possibility of occurrence, wherein
the determination target detection unit is configured to detect the determination target information in units of pixels from the captured image and output the detected determination target information and the indeterminacy of detection in units of pixels,
the target determination unit is configured to output a determination result in units of pixels based on the indeterminacy in units of pixels, and
the abnormal event estimation unit is configured to specify the abnormality occurrence location based on the determination target information in units of pixels and the determination result in units of pixels and estimate an abnormal event having a high possibility of occurrence.

5. The state determination device according to claim 1, further comprising
an imaging device determination unit configured to determine an abnormality of the imaging device, wherein
the determination target detection unit is configured to detect the determination target information from the captured images of a plurality of most recent frames, respectively, and output the indeterminacy of the plurality of most recent frames,
the target determination unit is configured to output a plurality of determination results related to the determination target information of the plurality of most recent frames, and
the imaging device determination unit is configured to determine that the imaging device is abnormal in a case where the number of abnormality determination included in the plurality of determination results exceeds a predetermined number.

6. The state determination device according to claim 1, further comprising:
a motion component detection unit configured to detect motion component information in units of pixels or in units of small regions in the captured image; and
an imaging device determination unit configured to determine an abnormality of the imaging device, wherein
the determination target detection unit is configured to detect the determination target information in units of pixels from the captured image and output the detected determination target information and the indeterminacy of detection in units of pixels,
the target determination unit is configured to output a determination result in units of pixels based on the indeterminacy in units of pixels, and
the imaging device determination unit is configured to extract a motion component of a pixel position of the captured image corresponding to a pixel determined to be abnormal by the target determination unit based on the motion component information, and determine that the imaging device is abnormal in a case where the extracted motion component is lower than a predetermined threshold value.

7. The state determination device according to claim 1, wherein
the imaging device is mounted on a moving body, and
the imaging device is configured to capture an image of a moving region of the moving body, the moving region including the determination target.

8. The state determination device according to claim 7, further comprising
a speed information acquiring unit configured to acquire speed information of the moving body, wherein
the determination target detection unit is configured to
detect, with respect to each of captured images of a plurality of most recent frames, the determination target information in units of pixels from the captured image by semantic segmentation, respectively,
track pixels indicating the same point among successive frames based on the speed information and calculate a variance of the determination target information of the pixels indicating the same point, and
calculate indeterminacy of detection in units of pixels based on the variance.

9. The state determination device according to claim 7, further comprising
a moving body control unit configured to control a speed of the moving body based on the determination target information detected by the determination target detection unit and a determination result of the target determination unit.

10. The state determination device according to claim 7, wherein
the moving body is a railway vehicle.

11. A moving body support system that supports a moving body on which the state determination device according to claim 1 is mounted, the moving body support system comprising:
an information control unit that is provided independently of the moving body;
a position information acquiring unit that is mounted on the moving body and is configured to acquire a current time and a current position of the moving body; and
an information transmitting and receiving unit that is mounted on the moving body and is configured to transmit, to the information control unit, reference information in which the current time and the current position are associated with the determination target information detected by the determination target detection unit, wherein
the information control unit is provided with an information storage unit that stores the reference information received from a plurality of moving bodies supported by the moving body support system,
the information control unit is configured to, when the reference information transmitted from the information transmitting and receiving unit is received, search a plurality of pieces of reference information stored in the information storage unit in which a time within a predetermined time before reception is associated with the current position, and transmit the reference information obtained by searching to the information transmitting and receiving unit, and
the determination target detection unit is configured to, when the information transmitting and receiving unit receives the reference information obtained by searching, calculate the indeterminacy based on the detected determination target information and the reference information obtained by searching.

12. A state determination method for determining a state of a determination target moving relative to an imaging device based on a captured image of the determination target, the state determination method comprising:
detecting determination target information from the captured image and outputting the detected determination target information and indeterminacy of the detection; and
determining that the state of the determination target is abnormal in a case where the indeterminacy is larger than a predetermined threshold value.
